# EUROPEAN PATENT APPLICATION

(11) **EP 4 426 030 A1**
(43) Date of publication of application: **04.09.2024**
(21) Application number: 21961819.6
(22) Date of filing: 28.10.2021
(51) Int. Cl.: H04W 72/04, G01S 13/75

(54) **WIRELESS COMMUNICATION METHOD, FIRST DEVICE, AND SECOND DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Novagraaf Technologies
(86) International application number: PCT/CN2021/127104
(87) International publication number: WO 2023/070453

(57) **Abstract**

Embodiments of the present application provide a wireless communication method, a first device, and a second device, and relate to the field of communications. The method comprises: receiving position information of the second device sent by the second device; and locating position information of the first device on the basis of the position information of the second device. The method provided in the present application can indirectly locate position information of the first device on the basis of position information of the second device acquired by the first device, thereby avoiding locating the position information of the first device by means of introducing a network node, which can reduce locating costs for the terminal device.

## Description

### TECHNICAL FIELD

Embodiments of the disclosure relates to the field of communications, and in particular to a method for wireless communication, a first device and a second device.

### BACKGROUND

Up to now, when locating a position of a terminal device by using positioning technology, it is usually necessary to introduce a network node to locate the position of the terminal device by means of the network node. For example, positioning technologies involve Global Positioning System (GPS), Wireless-Fidelity (WiFi), Bluetooth, Zigbee, Ultra Wide Band (UWB), etc. However, due to high deployment cost and large power consumption of the network node, cost of positioning technology introducing the network node is too high.

Therefore, a method for wireless communication which is capable of reducing the positioning cost of the terminal device is urgently needed in this field.

### SUMMARY

Embodiments of the disclosure provide a method for wireless communication, a first device and a second device, which is capable of reducing the positioning cost of the terminal device.

In a first aspect, there is provided a method for wireless communication in the disclosure. The method includes the following operations.

Position information of a second device transmitted by a second device is received.

Position information of the first device is located based on the position information of the second device.

In a second aspect, there is provided a method for wireless communication in the disclosure. The method includes the following operation.

Position information of a second device is transmitted to a first device. The position information of the second device is used to locate position information of the first device.

In a third aspect, there is provided a first device in the disclosure. The first device is configured to perform the method described in the first aspect or implementations thereof. In particular, the first device includes functional modules configured to perform the method described in the first aspect or implementations thereof.

In an implementation, the first device includes a processing unit configured to perform functions related to information processing. For example, the processing unit may be a processor.

In an implementation, the first device includes a transmitting unit and/or a receiving unit. The transmitting unit is configured to perform functions related to transmission, and the receiving unit is configured to perform functions related to reception. For example, the transmitting unit is a transmitter or an emitter, and the receiving unit is a receiver or an acceptor. For another example, the first device is a communication chip, the transmitting unit is an input circuit or an interface of the communication chip, and the transmitting unit is an output circuit or an interface of the communication chip.

In a fourth aspect, there is provided a second device in the disclosure. The second device is configured to perform the method described in the second aspect or implementations thereof. In particular, the second device includes functional modules for performing the method described in the second aspect or implementations thereof.

In an implementation, the second device includes a processing unit. The processing unit is configured to perform functions related to information processing. For example, the processing unit may be a processor.

In an implementation, the second device includes a transmitting unit and/or a receiving unit. The transmitting unit is configured to perform functions related to transmission, and the receiving unit is configured to perform functions related to reception. For example, the transmitting unit is a transmitter or an emitter, and the receiving unit is a receiver or an acceptor. For another example, the second device is a communication chip, the receiving unit is an input circuit or an interface of the communication chip, and the transmitting unit is an output circuit or an interface of the communication chip.

In a fifth aspect, there is provided a first device in the disclosure. The first device includes a processor and a memory. The memory is configured to store a computer program. The processor is configured to call and run the computer program stored in the memory to perform the method described in the first aspect or implementations thereof.

In an implementation, there are one or more processors, and there are one or more memories.

In an implementation, the memory may be integrated with the processor, or the memory may be disposed separately from the processor.

In an implementation, the first device further includes a transmitter (emitter) and a receiver (acceptor).

In a sixth aspect, there is provided a second device in the disclosure. The second device includes a processor and a memory. The memory is configured to store a computer program. The processor is configured to call and run the computer program stored in the memory to perform the method described in the second aspect or implementations thereof.

In an implementation, there are one or more processors, and there are one or more memories.

In an implementation, the memory may be integrated with the processor, or the memory may be disposed separately from the processor.

In an implementation, the second device further includes a transmitter (emitter) and a receiver (acceptor).

In a seventh aspect, there is provided a chip in the disclosure. The chip is configured to implement the method of any one of the first and second aspects or in various implementations thereof. In particular, the chip includes a processor. The processor is configured to call and run a computer program from a memory so that a device on which the chip is mounted to perform the method of any one of the first and second aspects or in various implementations thereof.

In an eighth aspect, there is provided a computer-readable storage medium in the disclosure. The computer-readable storage medium is configured to store a computer program, which causes a computer to perform the method of any one of the first and second aspects or in various implementations thereof.

In a ninth aspect, there is provided a computer program product in the disclosure. The computer program product includes computer program instructions, which cause a computer to perform the method of any one of the first and second aspects or in various implementations thereof.

In a tenth aspect, there is provided a computer program in the disclosure. The computer program, when running on a computer, causes the computer to perform the method of any one of the first and second aspects or in various implementations thereof.

[**0028]** Based on the technical solutions described above, the position information of the second device transmitted by the second device is received by the first device, and the position information of the first device is located based on the position information of the second device. That is, the position information of the first device is located based on the position information of the second device acquired by the first device, which avoids locating the position information of the first device by means of introducing a network node, thereby reducing the positioning cost of the terminal device.

### BRIEF DESCRIPTION OF THE DRAWINGS

FIG. 1 is a schematic diagram of a communication system provided in an embodiment of the disclosure.
FIG. 2 is a schematic diagram of a zero power communication system provided in the disclosure.
FIG. 3 is a schematic diagram of power harvesting provided in an embodiment of the disclosure.
FIG. 4 is a schematic diagram of backscattering communication provided in the disclosure.
FIG. 5 is a schematic diagram of a circuit of resistance-based load modulation provided in an embodiment of the disclosure.
FIG. 6 is a schematic flowchart of a method for wireless communication provided in an embodiment of the disclosure.
FIG. 7 is a schematic diagram of a framework for acquiring an energy supply signal by a second device provided in an embodiment of the disclosure.
FIG. 8 is a schematic diagram showing that the position information of the second device is predefined provided in an embodiment of the disclosure.
FIG. 9 is a schematic diagram showing that the position information of the second device is information acquired from a third device and the information acquired from the third device is information acquired from a fourth device provided in an embodiment of the disclosure.
FIG. 10 is another schematic diagram showing that the position information of the second device is information acquired from a third device and the information acquired from the third device is information acquired from a fourth device provided in an embodiment of the disclosure.
FIG. 11 is a schematic diagram showing that the second device is powered by a network device provided in an embodiment of the disclosure.
FIG. 12 is another schematic flowchart of a method for wireless communication provided in an embodiment of the disclosure.
FIG. 13 is yet another schematic flowchart of a method for wireless communication provided in an embodiment of the disclosure.
FIG. 14 is a schematic block diagram of a first device provided in an embodiment of the disclosure.
FIG. 15 is a schematic block diagram of a second device provided in an embodiment of the disclosure.
FIG. 16 is a schematic block diagram of a third device provided in an embodiment of the disclosure.
FIG. 17 is a schematic block diagram of a fourth device provided in an embodiment of the disclosure.
FIG. 18 is a schematic block diagram of a network device provided in an embodiment of the disclosure.
FIG. 19 is a schematic block diagram of a communication device provided in an embodiment of the disclosure.
FIG. 20 is a schematic block diagram of a chip provided in an embodiment of the disclosure.

### DETAILED DESCRIPTION

Technical solutions in embodiments of the disclosure will be described below in conjunction with the drawings in the embodiments of the disclosure. It is apparent that the described embodiments are merely part of but not all of the embodiments of the disclosure. For the embodiments of the disclosure, all other embodiments obtained by those of ordinary skill in the art without creative work fall within the scope of protection of the disclosure.

It should be understood that the terms "system" and "network" are often used interchangeably herein. In this context, the term "and/or" is merely an association relationship that describes associated objects, indicating that there are three relationships, for example, A and/or B may indicate three situations: existence of A alone, existence of A and B simultaneously, and existence of B alone. In addition, the character "/" generally indicates that the related objects are a kind of "or" relationship herein.

In the description of embodiments of the disclosure, the term "correspond" may mean that there is a direct or an indirect correspondence between the two, and it may also mean that there is an association relationship between the two, and it may also be a relationship such as indicating and being indicated, configuring and being configured, etc.

Embodiments of the disclosure are applied to various communication systems, such as: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE) system, a new radio (NR) system, an evolution system of NR system, a LTE-based access to unlicensed spectrum (LTE-U) system, a NR-based access to unlicensed spectrum (NR-U) system, an universal mobile telecommunications system (UMTS), a wireless local area networks (WLAN), a wireless fidelity (WiFi), a next generation communication system, a zero power communication system, a cellular Internet of Things, a cellular passive Internet of Things or other communication systems, etc.

Among them, the cellular Internet of Things is a development product of the combination of cellular mobile communication network and Internet of Things. The cellular passive Internet of Things is also called passive cellular Internet of Things, which is a combination of network devices and passive terminals. In the cellular passive Internet of Things, passive terminals may communicate with other passive terminals through network devices, or passive terminals may communicate by Device to Device (D2D) communication mode, while network devices only need to transmit carrier signals, that is, energy supply signals, to supply energy to the passive terminals.

Generally speaking, traditional communication systems support a limited number of connections and are easy to implement. However, with the development of communication technology, mobile communication systems will support not only traditional communication, but also, for example, D2D communication, machine to machine (M2M) communication, machine type communication (MTC), vehicle to vehicle (V2V) communication, etc. to which embodiments of the disclosure may also be applied.

Optionally, the communication system in the embodiments of the disclosure may be applied to a carrier aggregation (CA) scenario, a dual connectivity (DC) scenario, and a standalone (SA) network deployment scenario.

Embodiments of the disclosure do not make limitations to the spectrum applied. For example, embodiments of the disclosure may be applied to a licensed spectrum or an unlicensed spectrum.

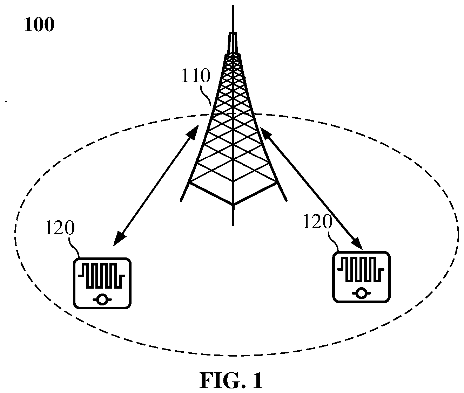

Exemplary, FIG. 1 illustrates a communication system 100 applied to an embodiment of the disclosure. The communication system 100 may include a network device 110. The network device 110 may be a device communicating with a terminal device(s) 120 (or referred to as a communication terminal, a terminal). The network device 110 may provide communication coverage for a particular geographic area and may communicate with a terminal device(s) located within the coverage area.

FIG. 1 exemplifies one network device and two terminal devices. Optionally, the communication system 100 may include multiple network devices, and other numbers of terminal devices may be included within the coverage area of each network device, which is not limited in the embodiment of the disclosure.

Optionally, the communication system 100 may also include other network entities such as a network controller, a mobile management entity and the like, which is not limited in the embodiment of the disclosure.

It should be understood that a device having a communication function in a network/system in the embodiment of the disclosure may be referred to as a communication device. Taking the communication system 100 shown in FIG. 1 as an example, the communication device may include a network device 110 and a terminal device(s) 120 having a communication function. The network device 110 and the terminal device(s) 120 may be specific devices described above, and will not be described here. The communication device may also include other devices in the communication system 100, for example, such as a network controller, a mobile management entity, which is not limited in the embodiment of the disclosure.

Embodiments of the disclosure describe various embodiments in conjunction with terminal devices and network devices. Specifically, the network device may be a device for communicating with a mobile device; and the network device may be an access point (AP) in a WLAN, a base transceiver station (BTS) in a GSM or CDMA, a NodeB (NB) in a WCDMA, an evolutional Node B (eNB or eNodeB) in a LTE, or a relay station or access point, or a vehicle-mounted device, a wearable device and a next generation NodeB (gNB) in NR network or a network device in a future evolved PLMN network, etc.

In embodiment of the disclosure, a network device provides services for a cell, and terminal device communicates with the network device through transmission resources (e.g. frequency domain resources, or spectrum resources) used by the cell. The cell may be a cell corresponding to the network device (e.g. base station), and the cell may belong to macro base station or a base station corresponding to a small cell. The small cell here includes: metro cell, micro cell, pico cell, femto cell, etc. These small cells have the characteristics of small coverage and low transmission power, and are suitable for providing high-speed data transmission services.

In embodiment of the disclosure, user equipment (UE) may also be referred to as a user device, an access terminal, a user unit, a user station, a mobile site, a mobile station, a remote station, mobile equipment, a user terminal, terminal, a wireless communication device, a user agent or a user facility, etc. The terminal device may be a station (ST) in WLAN, a cellular telephone, a cordless telephone, a session initiation protocol (SIP) telephone, a wireless local loop (WLL) station, a personal digital assistant (PDA) device, a handheld device with wireless communication function, a computing device or other processing device connected to a wireless modem, a vehicle-mounted device, a wearable device, and a next generation communication system, such as a terminal device in an NR network or a terminal device in a future evolved public land mobile network (PLMN) network, or a zero power device, etc.

By way of example but not limitation, the terminal device may also be a wearable device in the embodiments of the disclosure. The wearable device may also be called a wearable smart device, which is a general name of wearable devices developed by applying wearable technology to intelligently design daily wear, such as glasses, gloves, watches, clothing and shoes. The wearable device is a portable device that is worn directly on the body or integrated into the user's clothes or accessories. The wearable device is not only a kind of hardware device, but also realizes powerful functions through software supporting, data interaction and cloud interaction. Generalized wearable smart devices include devices of full functions and large size, which can realize complete or partial functions without relying on smart phones (such as smart watches or smart glasses), as well as devices that only focus on a certain application function and need to be used in conjunction with other devices (such as smart phones), such as various smart bracelets and smart jewelry for monitoring physical signs.

It should be understood that a zero power device may be understood as a device with power consumption lower than a preset power consumption. For example, the zero power device includes a passive terminal and even a semi-passive terminal.

Exemplary, the zero power device is a radio frequency identification (RFID) tag, which is a technology that utilizes spatial coupling of wireless radio frequency signals to achieve a contactless automatic transmission and recognition of tag information. RFID tags are also called "radio frequency tags" or "electronic tags". The types of electronic tags are classified based on different power supply modes into active electronic tags, passive electronic tags and semi-passive electronic tags. Active electronic tag refers to the energy for the operation of electronic tag being provided by battery. The battery, memory and antenna form the active electronic tag together, which is different from the activation method of passive radio frequency and transmits information through a set frequency band before the battery is replaced. The passive electronic tag, also known as an inactive electronic tag, does not support for built-in battery. When the passive electronic tag approaches a reader, the tag is in the near field range formed by the radiation of antennas of the reader. The electronic tag antenna generates induced current through electromagnetic induction, and the induced current drives a chip circuit of the electronic tag. The chip circuit transmits the identification information stored in the tag to the reader through the electronic tag antenna. Semi-passive electronic tag, also known as semi-active electronic tag, inherits the advantages of small size, light weight, low price and long service life of passive electronic tag. The built-in battery only provides power for a few circuits in the chip when there is no reader access, and only when there is no reader access, the built-in battery supplies power to the RFID chip, so as to increase the reading and writing distance of the tag and improve the reliability of communication.

RFID system is a wireless communication system. RFID system is composed of electronic tag (TAG) and reader/writer. Electronic tags include coupling components and chips. Each electronic tag has a unique electronic code and is placed on the measured target to mark the target object. The reader/writer may not only read information on the electronic tag, but also write the information on the electronic tag, and provide the energy needed for the electronic tag to communicate at the same time.

Zero power communication adopts power harvesting and backscattering communication technology. To facilitate understanding of technical solutions in the embodiments of the disclosure, the related technologies of zero power are illustrated.

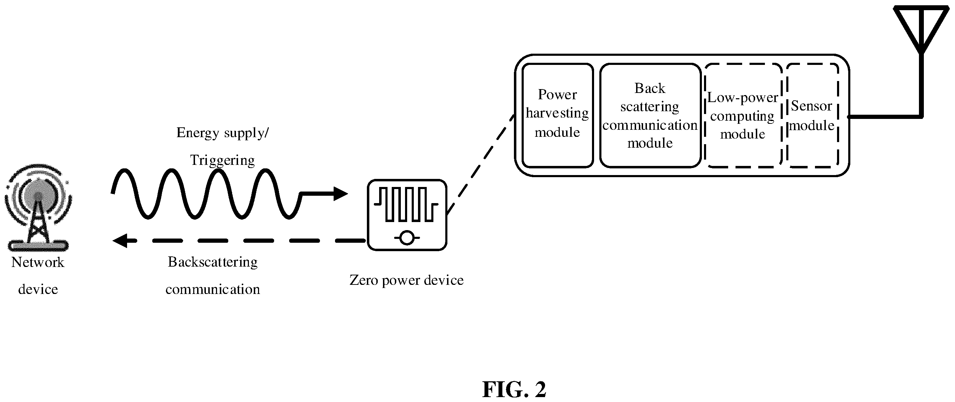

FIG. 2 is a schematic diagram of a zero power communication system provided in the disclosure.

As shown in FIG. 2, the zero power communication system consists of a network device and a zero power terminal. The network device is configured to transmit wireless energy supply signals, downlink communication signals to the zero power terminal and receive a backscattering signal from the zero power terminal. A basic zero power terminal includes a power harvesting module, a backscattering communication module and a low-power-consumption computing module. In addition, the zero power terminal may also have a memory for storing some basic information (such as article identification, etc.) or a sensor for acquiring sensing data such as ambient temperature and ambient humidity.

Zero power communication may also be called communication based on zero power terminal, and the key technologies in zero power communication mainly includes RF power harvesting and backscattering communication.

### 1. RF power harvesting.

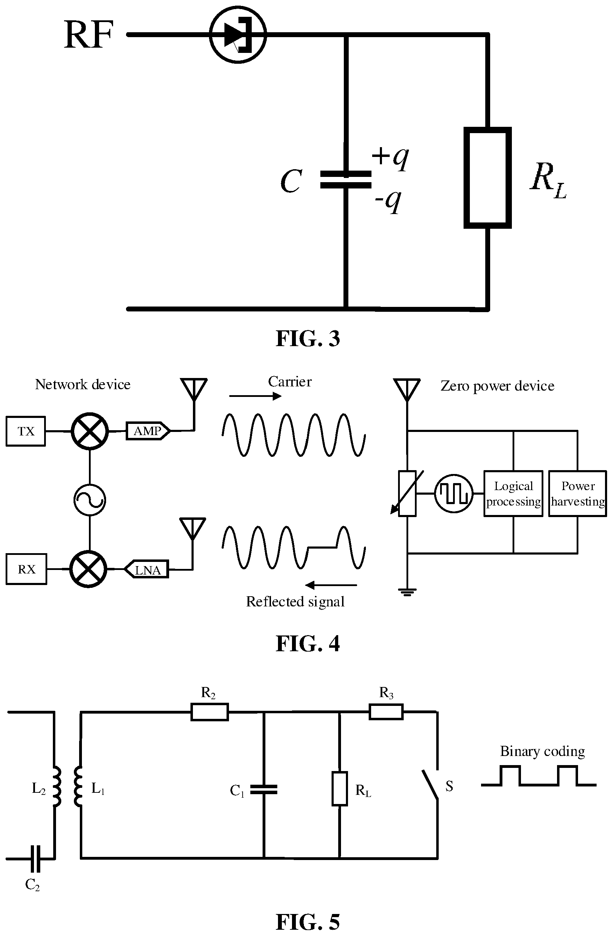

FIG. 3 is a schematic diagram of power harvesting provided in an embodiment of the disclosure.

As shown in FIG. 3, the RF power harvesting module harvests space electromagnetic wave energy in space based on the principle of electromagnetic induction, and then acquires the energy needed to drive the operation of a zero power terminal, such as driving a low-power demodulation and modulation module, a sensor and memory reading. Therefore, the zero power terminal does not need traditional batteries.

### 2. Backscattering communication.

FIG. 4 is a schematic diagram of backscattering communication provided in the disclosure.

As shown in FIG. 4, the zero power communication terminal receives a wireless signal transmitted by the network, modulates the wireless signal, loads the information to be transmitted and radiates the modulated signal from its antenna. This information transmission process is called backscattering communication.

It should be noted that the principle of backscattering communication shown in FIG. 4 is explained by a zero power device and a network device. Actually, any device with a backscattering communication function is able to realize backscattering communication.

Backscattering communication and load modulation function are inseparable. For the load modulation, circuit parameters of an oscillation loop of a zero power terminal are adjusted and controlled according to beats of data flows, such that the magnitude and phase of the impedance of the zero power device change accordingly, thereby completing the modulation process. Load modulation technology mainly includes two methods: resistance-based load modulation and capacitor-based load modulation.

FIG. 5 is a schematic diagram of a circuit of resistance-based load modulation provided in an embodiment of the disclosure.

As shown in FIG. 5, in resistance-based load modulation, the load is connected in parallel with a resistor, which is called load modulating resistor. The resistor is turned on or turned off based on the control of binary data flow. The on or off of the resistor causes the voltage of the circuit to change, so that amplitude shift keying (ASK) is realized. That is, modulation and transmission of signal are realized by adjusting the amplitude of the backscattering signal of the zero power terminal. Similarly, in capacitor-based load modulation, the resonant frequency of the circuit is changed through the on or off of a capacitor, and frequency shift keying (FSK) is realized. That is, modulation and transmission of signal are realized by adjusting the operating frequency of the backscattering signal of the zero power terminal.

Because the zero power terminal performs information modulation on incoming signals by means of load modulation, the backscattering communication process is realized. Therefore, the zero power terminal has significant advantages as follows.
1. The terminal device does not transmit signals actively, and realizes the backscattering communication by modulating incoming signals.
2. The terminal device does not rely on the traditional active power amplifier transmitter, and utilizes a low-power computing unit, and thus the hardware complexity is greatly reduced.
3. Battery-free communication is realized by combining power harvesting.

It should be understood that the terminal device mentioned above may be a zero power device (such as a passive terminal, or even a semi-passive terminal), or even the terminal device may be a non-zero power device, such as an ordinary terminal, and the ordinary terminal is able to perform backscattering communication in some cases.

In a detailed implementation, the data transmitted by the terminal device may represent binary "1" and "0" in different forms of code. Radio frequency identification systems generally use one of the following coding methods: reverse non-return-to-zero (NRZ) coding, Manchester coding, unipolar RZ coding, differential biphasic (DBP) coding, Miller coding and differential coding. Generally speaking, 0 and 1 are represented by different pulse signals.

Exemplary, zero power terminals are divided into the following types based on the energy source and usage of zero power terminals.

### 1. Passive zero power terminal.

Zero power terminals do not need built-in batteries. When a zero power terminal approaches a network device (such as reader/writer of RFID system), the zero power terminal is in the near field range formed by the radiation of antenna of the network device. Therefore, antenna of the zero power terminal generates induced current through electromagnetic induction, and the induced current drives the low-power chip circuit of the zero power terminal, to realize demodulation of forward link signal and modulation of backward link signal. For a backscattering link, the zero power terminal uses the backscattering implementation to transmit signals.

It can be seen that the passive zero power terminal does not need a built-in battery to drive either the forward link or the backward link, which is a real zero power terminal. Passive zero power terminals do not need batteries, and RF circuits and baseband circuits thereof are very simple. For example, there is no need for devices such as low noise amplifier (LNA), power amplifier (PA), crystal oscillator, ADC, etc. Therefore, the passive zero power terminals have many advantages, such as small size, light weight, very cheap price and long service life, etc.

### 2. Semi-passive zero power terminal.

A semi-passive zero power terminal is not equipped with conventional batteries, but may harvest radio wave energy using a RF power harvesting module and store the harvested energy in an energy storage unit (such as capacitor). After acquiring the energy, the energy storage unit may drive the low-power chip circuit of the zero power terminal to realize demodulation of forward link signal and modulation of backward link signal. For a backscattering link, the zero power terminal uses the backscattering implementation to transmit signals.

It can be seen that the semi-passive zero power terminal does not need built-in battery to drive either the forward link or the backward link. Although the energy stored in capacitor is used in operation, the energy comes from the radio energy harvested by the power harvesting module, and thus it is also a real zero power terminal. The semi-passive zero power terminal inherits many advantages of the passive zero power terminal, and therefore, the semi-passive zero power terminal has many advantages, such as small size, light weight, very cheap price and long service life, etc.

### 3. Active zero power terminal.

In some scenarios, the zero power terminal used may also be an active zero power terminal, which has built-in batteries. The batteries are used to drive the low-power chip circuit of the zero power terminal to realize demodulation of forward link signal and modulation of backward link signal. As for a backscattering link, the zero power terminal uses the backscattering implementation to transmit signals. Therefore, the zero power of this kind of terminal is mainly reflected in the fact that the signal transmission in the backward link does not require the power of the terminal itself, but uses a backscattering method. That is to say, the active zero power terminal supplies power to the RFID chip through the built-in batteries, so as to increase the reading and writing distance of the zero power terminal and improve the reliability of communication. Therefore, the active zero power terminal is applied in some scenes with relatively high requirements for communication distance and reading time-delay.

Exemplary, zero power terminals may perform power harvesting based on an energy supply signal.

Optionally, from the perspective of carrier of the energy supply signal, the energy supply signal may be a base station, a smart phone, an intelligent gateway, a charging station, a micro base station, etc.

Optionally, from the perspective of frequency band, the energy supply signal may be a low frequency signal, an intermediate frequency signal, a high frequency signal, etc.

Optionally, from the perspective of waveform, the energy supply signal may be a sine wave, a square wave, a triangular wave, a pulse, a rectangular wave, etc.

Optionally, the energy supply signal may be a continuous wave or a noncontinuous wave (i.e. a certain time interruption is allowed).

Optionally, the energy supply signal may be a signal specified in the 3GPP standard, for example, SRS, PUSCH, PRACH, PUCCH, PDCCH, PDSCH, PBCH, etc.

It should be noted that the carrier signal transmitted by the network device mentioned above may also be used to supply energy to zero power devices, and thus the carrier signal is also called the energy supply signal.

Exemplary, zero power terminals may perform backscattering communication based on the received triggering signal. Optionally, the triggering signal may be used to schedule or trigger backscattering communication of the zero power terminals. Optionally, the triggering signal carries scheduling information of a network device, or the triggering signal is a scheduling signaling or a scheduling signal transmitted by the network device.

Optionally, from the perspective of carrier of the energy supply signal, the triggering signal may be a base station, a smart phone, an intelligent gateway, etc.

Optionally, from the perspective of frequency band, the triggering signal may be a low frequency signal, an intermediate frequency signal, a high frequency signal, etc.

Optionally, from the perspective of waveform, the triggering signal may be a sine wave, a square wave, a triangular wave, a pulse, a rectangular wave, etc.

Optionally, the triggering signal may be a continuous wave or a noncontinuous wave (i.e. a certain time interruption is allowed).

Optionally, the triggering signal may be a signal specified in the 3GPP standard, for example, SRS, PUSCH, PRACH, PUCCH, PDCCH, PDSCH, PBCH, etc. The triggering signal may also be a new signal.

It should be noted that the energy supply signal and the triggering signal may be one signal or two independent signals, which is not specifically limited in the disclosure.

In addition, with the increasing application demand in the 5G industry, there are more and more types and application scenarios of connectors, and there will be higher requirements for the price and power consumption of communication terminals. The application of battery-free and low-cost passive Internet of Things devices has become the key technology of cellular Internet of Things, which enriches the types and number of terminals in the network, and then truly realizes the Internet of Everything. Herein, the passive Internet of Things devices may be based on the existing zero power devices, such as radio frequency identification (RFID) technology, and extended on this basis to be suitable for cellular Internet of Things.

In actual network deployment, a technical bottleneck faced by passive zero power communication technology is the limited coverage distance of a forward link, which is mainly due to the fact that the communication distance of the forward link is limited by the signal strength of wireless signals arriving at the zero power terminals. Based on the existing implementation process, the zero power terminals generally need to consume 10 uw (microwatts) of power to drive low-power circuits. This means that the signal power arriving at a zero power terminal is required to be at least -20 dBm. Limited by the requirements of radio regulation, the transmission power of a network device is generally not too large. For example, in ISM frequency band where RFID works, the maximum transmission power is 30 dBm. Therefore, considering the radio propagation loss in space, the transmission distance of passive zero power terminal is generally in the range of 10 m to tens of meters.

However, a zero power terminal added with the energy storage module has the potential to significantly expand the communication distance, and this is due to the fact that the zero power terminal may use the radio frequency (RF) power harvesting module to collect radio waves, thereby continuously acquire radio energy and store it in an energy storage unit. After acquiring enough energy, the energy storage unit may drive the low-power circuit to work to realize signal demodulation in the forward link and signal modulation in the backward link. The power harvesting module may perform power harvesting when the strength of the received radio signals is not lower than -30 dBm and input electric energy to the energy storage unit. Therefore, the coverage of the forward link for the zero power terminal added with the energy storage module depends on the RF power harvesting threshold (e.g.,-30 dBm). Compared with the passive zero power terminal, the strength of the received radio signal by the zero power terminal with the energy storage module is relaxed from -20 dBm to -30 dBm, so that a link budget gain of 10 dB is obtained, and therefore the downlink coverage is improved by more than 3 times.

To facilitate understanding of technical solutions provided in the disclosure, the related technologies of positioning are illustrated below.

In outdoor environment, thanks to GPS system and independent cellular system, positioning of mobile terminal can achieve higher accuracy. However, in indoor environment and environment with deep shadow effect, satellite and cellular signals are often interrupted, and the positioning effect is poor. When satellite positioning cannot be used in the indoor environment, an indoor positioning technology is used as an auxiliary positioning technology for the satellite positioning, so as to solve the problem that the satellite signal is weak when arriving at the ground and unable to penetrate the building, and finally locate the current position of the object. Indoor positioning refers to locating positions in indoor environment, which mainly integrates various technologies, such as wireless communication, base station positioning and inertial navigation positioning, to form a set of indoor positioning system, so as to realize the monitoring of positions of people and objects in indoor space. Positioning technology is for example Wireless-Fidelity (WiFi), Bluetooth, Zigbee protocol, Ultra Wide Band (UWB) and the like. It can be seen that when locating the position of a terminal device by using positioning technology, it is usually necessary to introduce a network node to locate the position of the terminal device by means of the network node. However, due to high deployment cost and large power consumption of the network node, cost of the positioning technology introducing the network node is too high.

Based on this, embodiments of the disclosure provide a method for wireless communication, a first device and a second device, which is capable of reducing the positioning cost of the terminal device.

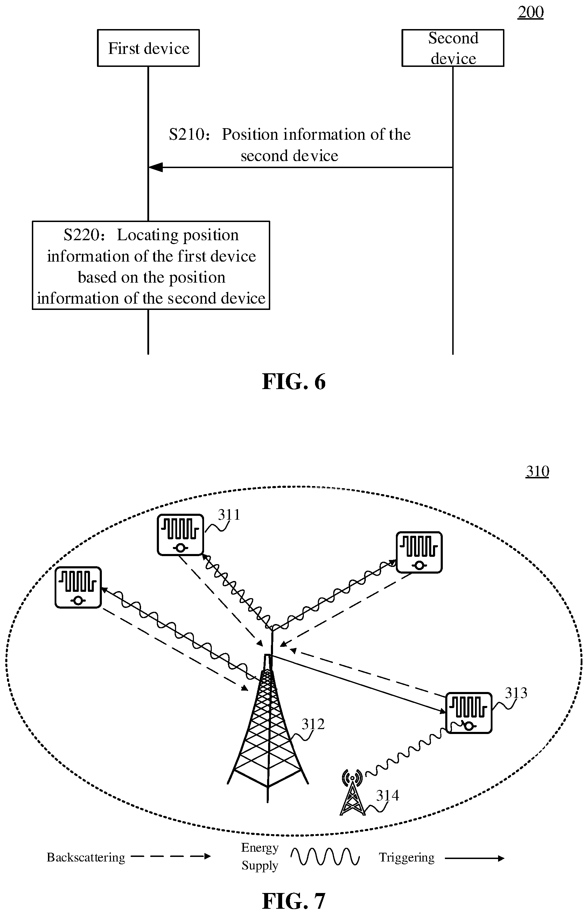

FIG. 6 is a schematic flowchart of a method 200 for wireless communication provided in an embodiment of the disclosure. The method 200 is performed interactively by a first device and a second device. The first device shown in FIG. 6 may be either a terminal device or a network device, which is not specifically limited in the disclosure. For example, the first device may be the terminal device 120 as shown in FIG. 1, such as a zero power terminal. For another example, the first device may be the network device 110 as shown in FIG. 1. The second device shown in FIG. 6 may be the terminal device 120 as shown in FIG. 1, such as a zero power terminal.

As shown in FIG. 6, the method 200 includes all or part of the following operations.

At S210, the first device receives position information of the second device transmitted by the second device.

At S220, the first device locates position information of the first device based on the position information of the second device.

Correspondingly, the second device transmits the position information of the second device to the first device, and the position information of the second device is used to locate the position information of the first device.

In other words, the second device acts as an auxiliary device for locating the position information of the first device. For example, the second device acts as an auxiliary device for locating the position information of an ordinary terminal or even a network device. In other words, the position information of the second device is auxiliary information for assisting in locating the position information of the first device.

In the embodiment, the position information of the second device transmitted by the second device is received by the first device, and the position information of the first device is located by the first device based on the position information of the second device. That is, the position information of the first device may be directly located based on the position information of the second device acquired by the first device, which avoids locating the position information of the first device by means of introducing network nodes, and thus reducing the positioning cost of the terminal device.

It should also be noted that the number of second devices involved is not specifically limited in the disclosure. That is to say, the first device may receive position information of one second device or position information of multiple second devices, which is not specifically limited in the disclosure. Exemplary, the first device receives multiple position information; and locates the position information of the first device based on the multiple position information. The multiple position information may be position information transmitted by the multiple second devices respectively, or the multiple position information have a one to one correspondence with the multiple second devices.

In addition, the second device may be any device from which the first device can receive signals. For example, the second device may be a device around the first device. That is to say, for the first device, it may read the position information of one or more second device in the surrounding environment thereof, and determine the position information of the first device through a certain method based on the acquired position information of the one or more second device, so as to realize positioning.

In some embodiments, the position information of the second device is carried in a backscattering signal.

In other words, the second device may be a zero power terminal, that is, the zero power terminal may transmit a backscattering signal to the first device, and the backscattering signal includes or carries the position information of the second device. That is to say, zero power terminals provide their own position information to other devices, for example, transmit their own position information in a manner of backscattering. Correspondingly, other devices may read the position information stored in the zero power terminals through an energy supply signal or a triggering signal.

As mentioned above, the zero power terminals involved in the disclosure need to obtain energy through a wireless energy supply-based method before communication. Therefore, before communicating with a zero power terminal, the first device is necessary to ensure that the zero power terminal has received radio waves for wireless energy supply and acquired wireless energy through power harvesting. It should be noted that the implementation of receiving radio waves for wireless power supply by zero power terminals is not specifically limited in the disclosure.

FIG. 7 is a schematic diagram of a framework 310 for acquiring an energy supply signal by a second device provided in an embodiment of the disclosure.

As shown in FIG. 7, the framework 310 for acquiring an energy supply signal includes a zero power terminal 311, a network device 312, a zero power terminal 313 and another node 314. Herein, the modes of acquiring wireless power supply by the zero power terminal include a mode of acquiring wireless power supply through the network device 312 and a mode of acquiring wireless power supply through another node 314. The mode of acquiring wireless power supply through the network device 312 means that the network device 312 transmits energy supply signals and/or triggering signals to the zero power terminal 311, and the zero power terminal 311 obtains wireless energy by harvesting the energy supply signals and/or the triggering signals. Further, through the triggering signal, the zero power terminal 311 is triggered to transmit a backscattering signal to the network device 312. The mode of acquiring wireless energy supply through another node 314 means that another node 314 transmits energy supply signals to the zero power terminal 313, and the zero power terminal 313 acquires wireless energy by harvesting the energy supply signals. Further, the network device 312 transmits a triggering signal to the zero power terminal 313, such that the zero power terminal 313 is triggered to transmit the backscattering signal to the network device 312. Herein, wireless signals transmitted by another node 314 may be used for power supply of terminal. The another node 314 includes, but is not limited to, a smart phone, a relay node, a dedicated power supply node, etc. in the network.

It should be noted that the zero power terminal may acquire energy by means of wireless energy supply, and the strength of the energy supply signal arriving at a zero power terminal is required to meet a certain threshold, such as -20 dBm. It results in a small coverage range of energy supply signal transmitted by network device, generally in a range of tens of meters, under the condition of limited transmission power of the energy supply signal. In order to solve the problems mentioned above, wireless power supply may be realized by using more network nodes in the disclosure, which significantly improves the coverage range.

In addition, in the disclosure, the energy supply signal is a wireless signal with wireless energy supply function, such as a carrier signal, a signal carrying information, etc. Optionally, the signal carrying information may be the triggering signal or the like.

In some embodiments, the position information of the second device is position information stored in the second device.

In some embodiments, the position information of the second device is predefined.

Optionally, the position information of the second device being predefined comprises that: the position information of the second device is position information of deployment of the second device.

In other words, the position information of the second device being predefined is equivalent to a deployment position of the second device being a fixed position. That is, the position information of the second device is fixed position information. In a specific implementation, a writing operation may be performed for the second device through a reader/writer device, so as to write the position information of the second device into a memory of the second device.

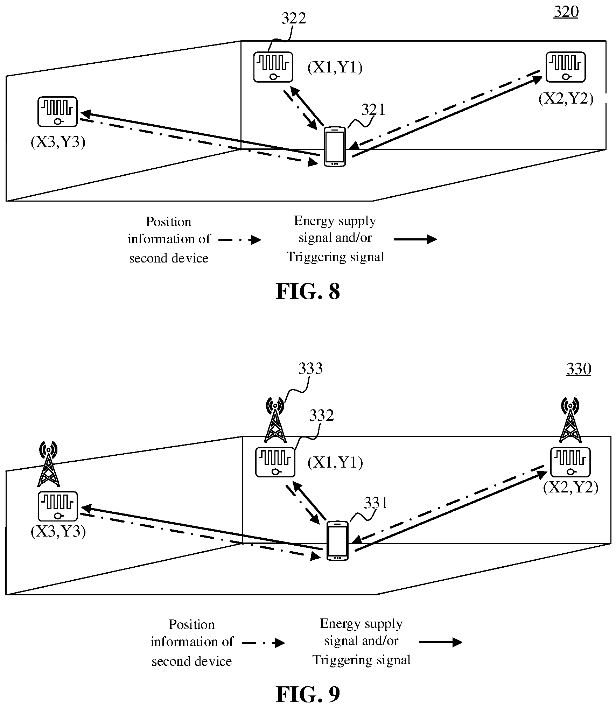

FIG. 8 is a schematic diagram showing that the position information of the second device is predefined provided in an embodiment of the disclosure.

As shown in FIG. 8, the second device for determining the position information of a first device 321 in the frame 320 may include three zero power terminals, where each zero power terminal has its own position information stored therein. Taking the position information including coordinate information as an example, the coordinate information of the three zero power terminals are (X1, Y1), (X2, Y2) and (X3, Y3), respectively.

Exemplary, taking determining the position information of the first device 321 based on the position information of a zero power terminal 322 among the three zero power terminals as an example, the first device 321 may transmit an energy supply signal and/or a triggering signal to the zero power terminal 322. Correspondingly, after receiving the energy supply signal and/or the triggering signal transmitted by the first device 321, the zero power terminal 322 may transmit a backscattering signal to the first device 321 and carry the position information of the zero power terminal 322 in the backscattering signal. Specifically, the first device 321 may transmit a signal to trigger the zero power terminal 322 to perform backscattering. As an implementation, the signal may be the energy supply signal, and the energy supply signal may be a carrier signal. The zero power terminal 322 receives the carrier signal, and uses the energy provided by the carrier signal to perform load modulation on the carrier signal, so as to form a backscattering signal carrying information and send it to other devices. As another implementation, the signal may also be triggering information, and the triggering information may be carried on the energy supply signal. For example, the carrier of the energy supply signal is modulated to carry the triggering information. Of course, the triggering information may also be carried on channels or signals other than the energy supply signal, and the zero power terminal 322 demodulates the channels or signals through the power supply of the energy supply signal to obtain the triggering information.

Of course, FIG. 8 is only an example of the disclosure and should not be construed as a limitation of the disclosure.

In other alternative embodiments, for example, the position information of the zero power terminal 322 may also be latitude and longitude information and/or relative position information in a particular environment, etc. For example, the relative position information in the particular environment includes, but is not limited to, region information in an indoor environment, parking place position information in a parking lot environment, and the like. For example, the region information in the indoor environment includes, but is not limited to, floor information in the indoor environment or orientation information in the indoor environment, and the like.

In some embodiments, the position information of the second device is information acquired from a third device.

In other words, the position information stored in the second device is information acquired from other devices. In other words, the position information of the second device may be updated.

Optionally, the information acquired from the third device is information acquired from a fourth device, the fourth device including at least one of:
a GPS receiver, a mobile terminal, a network device, a WiFi device, or a Bluetooth device.

It should be noted that the fourth device including at least one of: a GPS receiver, a mobile terminal, a network device, a WiFi device, or a Bluetooth device is only an example of the disclosure and should not be construed as a limitation of the disclosure. The fourth device of the disclosure may be any device with positioning function.

Optionally, the second device and the third device are connected in a wired or wireless manner.

In other words, the second device interacts with the third device in a wired or wireless manner. For example, the second device acquires the position information of the second device from the third device in a wired or wireless manner.

Optionally, an interface for information exchange is provided between the second device and the third device.

In other words, the second device interacts with the third device through the interface for information exchange provided between the second device and the third device. For example, the second device acquires the position information of the second device from the third device through the interface. The interface may be any interface that enables information exchange, which is not specifically limited in the embodiments of the disclosure. The interface is, for example, an air interface.

Optionally, the third device is a network device.

It should be noted that the third device being a network device is only an example of the disclosure and should not be construed as a limitation of the disclosure. The third device of the disclosure may be a device with the ability to acquire position information. For example, the third device being a device with the ability to acquire location information includes: the third device being a device with a positioning function; or the third device being a device with the ability to acquire position information through a fourth device. In other words, for example, the third device may include at least one of: a GPS receiver, a mobile terminal, a network device, a WiFi device, or a Bluetooth device.

Optionally, the third device is a device associated with the second device.

Exemplary, the specific implementation of the third device being a device associated with the second device is not limited.

For example, the third device being a device associated with the second device may include: the second device being a component in the third device or the third device being a device for controlling the second device. For example, the third device being a device associated with the second device may mean that: the third device is a device associated with the second device in hardware or the third device is a device associated with the second device in software.

FIG. 9 is a schematic diagram showing that the position information of the second device is information acquired from a third device and the information acquired from the third device is information acquired from a fourth device provided in an embodiment of the disclosure.

As shown in FIG. 9, the second device for determining the position information of the first device 331 in the frame 330 may include three zero power terminals, where each zero power terminal has its own position information stored therein. Taking position information including coordinate information as an example, the coordinate information of the three zero power terminals are (X1, Y1), (X2, Y2) and (X3, Y3), respectively. Herein, each zero power terminal may be integrated with a network device, and each zero power terminal may acquire its own position information through the network device to which it belongs and stores it. That is to say, the three zero power terminals have interfaces for information exchange with the three network devices, respectively. Exemplary, taking a zero power terminal 332 among the three zero power terminals as an example, the zero power terminal 332 is integrated with a network device 333, and the zero power terminal 332 may acquire the position information of the zero power terminal 332 through the network device 333 to which it belongs and stores it.

Exemplary, taking determining the position information of the first device 331 based on the position information of the zero power terminal 332 among the three zero power terminals as an example, the first device 331 may transmit an energy supply signal and/or a triggering signal to the zero power terminal 332. Correspondingly, after receiving the energy supply signal and/or the triggering signal transmitted by the first device 331, the zero power terminal 332 may transmit a backscattering signal to the first device 331 and carry the position information of the zero power terminal 332 in the backscattering signal. Specifically, the first device 331 may transmit a signal to trigger the zero power terminal 332 to perform backscattering. As an implementation, the signal may be the energy supply signal, and the energy supply signal may be a carrier signal. The zero power terminal 332 receives the carrier signal, and uses the energy provided by the carrier signal to perform load modulation on the carrier signal, so as to form a backscattering signal carrying information and send it to other devices. As another implementation, the signal may also be triggering information, and the triggering information may be carried on the energy supply signal. For example, the carrier of the energy supply signal is modulated to carry the triggering information. Of course, the triggering information may also be carried on channels or signals other than the energy supply signal, and the zero power terminal 332 may demodulate the channels or signals through the power supply of the energy supply signal to obtain the triggering information.

In the embodiment, one zero power terminal is integrated on one network device, which not only reduces the positioning cost of the first device, but also flexibly updates position information of the zero power terminal, thereby facilitating flexible deployment of the zero power terminal.

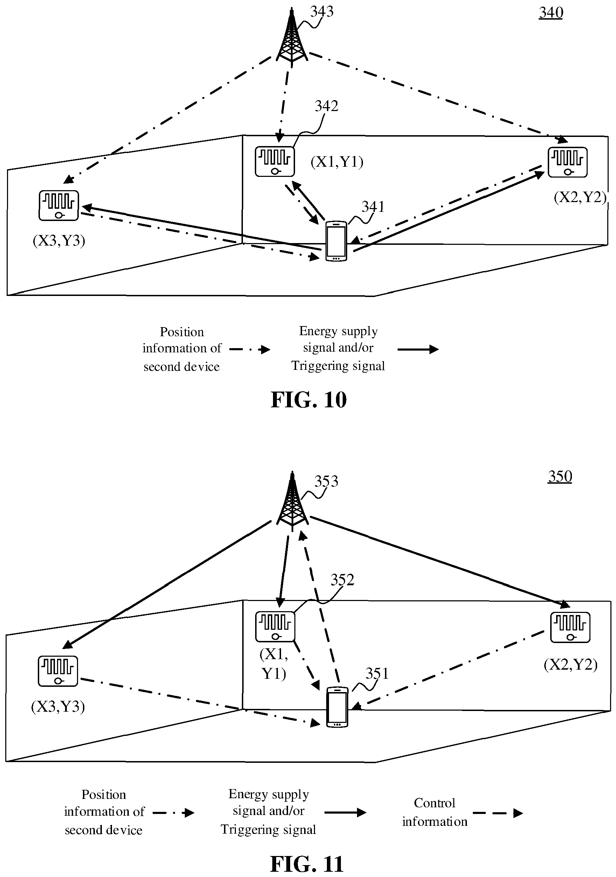

FIG. 10 is another schematic diagram showing that the position information of the second device is information acquired from a third device and the information acquired from the third device is information acquired from a fourth device provided in an embodiment of the disclosure.

As shown in FIG. 10, the second device for determining the position information of the first device 341 in the frame 340 may include three zero power terminals, where each zero power terminal has its own position information stored therein. Taking position information including coordinate information as an example, the coordinate information of the three zero power terminals are (X1, Y1), (X2, Y2) and (X3, Y3), respectively. Herein, the three zero power terminals may be controlled centrally through a network device 343. That is to say, each zero power terminal may acquire its own position information through the network device 343 and store it. That is to say, the three zero power terminals each has an interface for information exchange with the network device 343. Exemplary, taking a zero power terminal 342 among the three zero power terminals as an example, the zero power terminal 342 may acquires position information of the zero power terminal 342 through the network device 343 to which it belong and store it.

Exemplary, taking determining the position information of the first device 341 based on the position information of the zero power terminal 342 among the three zero power terminals as an example, the first device 341 may transmit an energy supply signal and/or a triggering signal to the zero power terminal 342. Correspondingly, after receiving the energy supply signal and/or the triggering signal transmitted by the first device 341, the zero power terminal 342 may transmit a backscattering signal to the first device 341 and carry the position information of the zero power terminal 342 in the backscattering signal. Specifically, the first device 341 may transmit a signal to trigger the zero power terminal 342 to perform backscattering. As an implementation, the signal may be the energy supply signal, and the energy supply signal may be a carrier signal. The zero power terminal 342 receives the carrier signal, and uses the energy provided by the carrier signal to perform load modulation on the carrier signal, so as to form a backscattering signal carrying information and send it to other devices. As another implementation, the signal may also be triggering information, and the triggering information may be carried on the energy supply signal. For example, the carrier of the energy supply signal is modulated to carry the triggering information. Of course, the triggering information may also be carried on channels or signals other than the energy supply signal, and the zero power terminal 342 demodulates the channels or signals through the power supply of the energy supply signal to obtain the triggering information.

In the embodiment, zero power terminals are centrally controlled by one network device, which not only reduces the positioning cost of the first device, but also flexibly updates the position information of the zero power terminals, thereby facilitating flexible deployment of the zero power terminals.

Of course, FIG. 9 and FIG. 10 are only examples of the disclosure and should not be construed as limitations of the disclosure.

In other alternative embodiments, for example, the position information of the zero power terminal 332 or the zero power terminal 342 may also be latitude and longitude information and/or relative position information in a particular environment, etc. For example, the relative position information in the particular environment includes, but is not limited to, region information in an indoor environment, parking place position information in a parking lot environment, and the like. For example, the region information in the indoor environment includes, but is not limited to, floor information in the indoor environment or orientation information in the indoor environment, and the like.

In some embodiments, the method 200 further includes the following operation.

At least one of an energy supply signal or a triggering signal is transmitted by the first device to the second device.

In some embodiments, the method 200 further includes the following operation.

Control information is transmitted by the first device to the network device. The control information is used to control the network device to transmit at least one of an energy supply signal or a triggering signal to the second device.

FIG. 11 is a schematic diagram showing that the second device is powered by a network device provided in an embodiment of the disclosure.

As shown in FIG. 11, the second device for determining the position information of the first device 351 in the frame 350 may include three zero power terminals, where each zero power terminal has its own position information stored therein. Taking position information including coordinate information as an example, the coordinate information of the three zero power terminals are (X1, Y1), (X2, Y2) and (X3, Y3), respectively.

Exemplary, taking determining the position information of the first device 351 based on position information of a zero power terminal 352 among the three zero power terminals as an example, the first device 351 may transmit control information to a network device 353, in order to control the network device 353 to transmit an energy supply signal and/or a triggering signal to the zero power terminal 352. Correspondingly, after receiving the energy supply signal and/or the triggering signal transmitted by the network device 353, the zero power terminal 352 may transmit a backscattering signal to the first device 351, and the position information of the zero power terminal 352 is carried in the backscattering signal. Specifically, the network device 353 may transmit a signal to trigger the zero power terminal 352 to perform backscattering. As an implementation, the signal may be the energy supply signal, and the energy supply signal may be a carrier signal. The zero power terminal 352 receives the carrier signal, and uses the energy provided by the carrier signal to perform load modulation on the carrier signal, so as to form a backscattering signal carrying information and send it to other devices. As another implementation, the signal may also be triggering information, and the triggering information may be carried on the energy supply signal. For example, the carrier of the energy supply signal is modulated to carry the triggering information. Of course, the triggering information may also be carried on channels or signals other than the energy supply signal, and the zero power terminal 352 demodulates the channels or signals through the power supply of the energy supply signal to obtain the triggering information.

In this embodiment, the network device needs to transmit an energy supply signal or a triggering signal to a zero power terminal(s), so that the first device can receive the position information transmitted by the zero power terminal(s) in a manner of backscattering. That is to say, in a region where the deployed zero power terminal(s) for positioning is located, the energy supply signal or the triggering signal for the zero power terminal(s) is transmitted through the network device. When the first device needs to acquire the position information of the zero power terminal(s), the first device may transmit control information to the network device, and the network device transmits the energy supply signal or the triggering signal to the zero power terminal(s). Correspondingly, the zero power terminal(s) performs backscattering and transmits the stored position information to the first device.

Of course, FIG. 11 is only an example of the disclosure and should not be construed as a limitation of the disclosure.

In other alternative embodiments, for example, the position information of the zero power terminal 352 may also be latitude and longitude information and/or relative position information in a particular environment, etc. For example, the relative position information in the particular environment includes, but is not limited to, region information in an indoor environment, parking place position information in a parking lot environment, and the like. For example, the region information in the indoor environment includes, but is not limited to, floor information in the indoor environment or orientation information in the indoor environment, and the like.

In some embodiments, the position information of the second device comprises at least one of: coordinate information, latitude and longitude information, or region position information.

Exemplary, the region position information may be the relative position information in a particular environment. For example, the relative position information in the particular environment includes, but is not limited to, region information in an indoor environment, parking place position information in a parking lot environment, and the like. For example, the region information in the indoor environment includes, but is not limited to, floor information in the indoor environment or orientation information in the indoor environment, and the like.

In some embodiments, the S220 may include the following operation.

The first device determines the position information of the first device based on the position information of the second device and at least one of the following information of a backscattering signal transmitted by the second device:
time of arrival (TOA), time difference of arrival (TDOA), angle of arrival (AOA) or received signal strength (RSS).

Exemplary, the first device transmits a triggering signal to the second device, such that the second device is triggered to transmit a backscattering signal to the first device, and the position information of the second device is carried in the backscattering signal. Based on this, after receiving the backscattering signal transmitted by the second device, the first device may determine the position information of the first device based on the position information of the second device carried by the backscattering signal and at least one of the following information of the backscattering signal transmitted by the second device: TOA, TDOA, AOA or RS. Finally, the positioning of the first device is realized.

It should be noted that in the disclosure, TOA, TDOA, AOA or RSS may be information of a first backscattering signal transmitted by the second device, and the position information of the second device may also be carried in a second backscattering signal transmitted by the second device. Herein, the first backscattering signal and the second backscattering signal may be the same signal or different signals, which is not specifically limited in the disclosure. For example, after receiving the second backscattering signal carrying the position information of the second device, the first device may acquire the position information of the second device and the TOA, TDOA, AOA or RSS of the second backscattering signal simultaneously. For another example, after receiving the second backscattering signal carrying the position information of the second device, the first device may only acquire the position information of the second device. In addition, the first device may transmit a triggering signal to the second device before or after acquiring the second backscattering signal, to acquire the first backscattering signal triggered by the triggering signal and acquire TOA, TDOA, AOA or RSS of the first backscattering signal.

In addition, the specific implementation of the first device determining the position information of the first device based on the position information of the second device and the at least one of TOA, TDOA, AOA or RSS of the first backscattering signal is not limited in the disclosure.

For example, the first device may first determine a positional relationship between the second device and the first device based on the at least one of TOA, TDOA, AOA and RSS of the first backscattering signal, and then determine the position information of the first device based on the position information of the second device and the positional relationship.

Taking the first device determining the position information of the first device based on the position information of the second device and the TOA of the first backscattering signal as an example, the first device may determine round-trip time of signal transmission between the first device and the second device based on the TOA of the first backscattering signal and sending time at which the triggering signal for triggering the first backscattering signal transmitted by the first device is sent. Then, the first device may determine a distance between the first device and the second device based on the round-trip time. Finally, the first device determines the position information of the first device based on the position information of the second device and the distance. In this way, the positioning of the first device is realized.

Taking the first device determining the position information of the first device based on the position information of the second device and the RSS of the first backscattering signal as an example, the first device may determine a path loss of signal transmission between the first device and the second device based on the RSS of the first backscattering signal and a transmission strength of the first backscattering signal. Then, the first device may determine a distance between the first device and the second device based on the path loss. Finally, the first device determines the position information of the first device based on the position information of the second device and the distance. In this way, the positioning of the first device is realized.

In some embodiments, the method is applicable to outdoor positioning scenes and/or indoor positioning scenes.

It should be noted that in the scheme of interaction between the first device and the second device, the operations of the second device may refer to the corresponding operations of the first device, which will not be described here for the sake of simplicity.

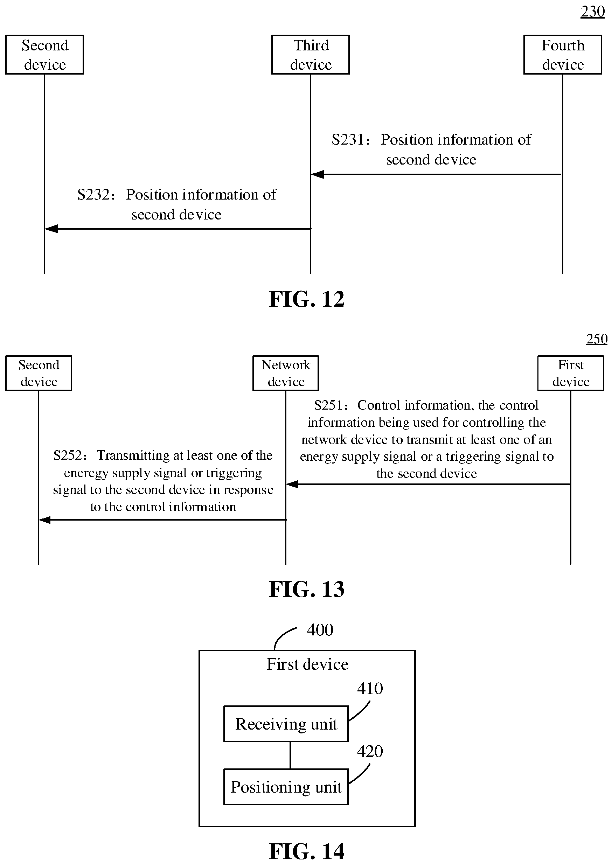

The methods for wireless communication based on embodiments of the disclosure have been described in detail above from the perspective of the first device and the second device with reference to FIGS. 6 to 11, and the method for wireless communication based on embodiments of the disclosure will be described below from the perspective of a third device and a fourth device with reference to FIG. 12.

FIG. 12 is a schematic flowchart of a method 230 for wireless communication provided in an embodiment of the disclosure. The method 230 may be performed interactively by a second device, a third device, and a fourth device. The second device shown in FIG. 12 is the terminal device 120 as shown in FIG. 1, such as a zero power terminal. The third device shown in FIG. 12 is a network device. The fourth device shown in FIG. 12 includes, but is not limited to, a global positioning system (GPS) receiver, a mobile terminal, a network device, a wireless fidelity (WiFi) device or a Bluetooth device.

As shown in FIG. 13, the method 230 includes all or part of the following operations.

At S231, the third device acquires position information of the second device from the fourth device.

At S232, the third device transmits the position information of the second device to the second device.

In some embodiments, the fourth device includes at least one of:
a global positioning system (GPS) receiver, a mobile terminal, a network device, a wireless fidelity (WiFi) device or a Bluetooth device.

In some embodiments, the third device and the second device are connected in a wired or wireless manner.

In some embodiments, an interface for information exchange is provided between the third device and the second device.

In some embodiments, the third device is a network device.

In some embodiments, the third device is a device associated with the second device.

In some embodiments, the position information of the second device is carried in at least one of an energy supply signal or a triggering signal transmitted by the third device to the second device.

In some embodiments, the position information of the second device is used to locate the position information of the first device.

In some embodiments, the position information of the second device comprises at least one of: coordinate information, latitude and longitude information, and region position information.

In some embodiments, the method is applicable to outdoor positioning scenes and/or indoor positioning scenes.

The method for wireless communication based on embodiments of the disclosure will be described below from the perspective of a first device, a second device and a network device with reference to FIG. 13.

FIG. 13 is a schematic flowchart of a method 250 for wireless communication provided in an embodiment of the disclosure. The method 250 may be performed interactively by a first device, a second device and a network device. The first device shown in FIG. 13 may be either a terminal device or a network device, which is not specifically limited in the disclosure. For example, the first device is the terminal device 120 as shown in FIG. 1, such as a zero power terminal. For another example, the first device is the network device 110 as shown in FIG. 1. The second device shown in FIG. 13 is the terminal device 120 as shown in FIG. 1, such as a zero power terminal.

As shown in FIG. 13, the method 250 includes all or part of the following operations.

Control information transmitted by a first device is received by a network device, and the control information is used to control the network device to transmit at least one of an energy supply signal or a triggering signal to a second device.

At least one of an energy supply signal or a triggering signal is transmitted by the network device to the second device in response to the control information.

In some embodiments, the method 250 further includes the following operations.

The position information of the second device is acquired by the network device from the fourth device.

The position information of the second device is transmitted by the network device to the second device.

In some embodiments, the fourth device includes at least one of:
a global positioning system (GPS) receiver, a mobile terminal, a network device, a wireless fidelity (WiFi) device or a Bluetooth device.

In some embodiments, the network device and the second device are connected in a wired or wireless manner.

In some embodiments, an interface for information exchange is provided between the network device and the second device.

In some embodiments, the network device is a device associated with the second device.

In some embodiments, the position information of the second device is carried in at least one of an energy supply signal or a triggering signal transmitted from the network device to the second device.

In some embodiments, the position information of the second device is used to locate the position information of the first device.

In some embodiments, the position information of the second device comprises at least one of: coordinate information, latitude and longitude information, or region position information.

In some embodiments, the method is applicable to outdoor positioning scenes and/or indoor positioning scenes.

It should be noted that the operations and terms in the methods 230 and 250 may refer to corresponding operations and related terms in the method 200, which will not be described here to avoid repetition.

The preferred embodiments of the disclosure have been described in detail above in conjunction with the accompanying drawings, but the disclosure is not limited to the specific details in the above embodiments. A variety of simple variations may be made to the technical solutions of the present disclosure within the technical concept of the disclosure, and these simple variations shall fall within the scope of protection of the disclosure. For example, the specific technical features described in the above-mentioned specific embodiments may be combined in any suitable way without contradiction. Further explanation will not be made to the various possible combinations in the disclosure, in order to avoid unnecessary repetition. For another example, the various embodiments of the disclosure may be combined in any way as long as they do not violate the idea of the disclosure, and they should also be regarded as the contents disclosed by the disclosure.

It should also be understood that in various method embodiments of the disclosure, the size of the serial numbers of the above-mentioned processes does not necessarily indicate the order of execution. The order of execution of each process should be determined by its function and inherent logic, and shall not construct any limitation on the implementation process of the embodiments of the disclosure. Further, in the embodiments of the disclosure, the terms "downlink" and "uplink" are used to indicate the transmission direction of the signal or data. Herein, "downlink" is used to indicate that the transmission direction of the signal or data is a first direction transmitting from a station to user equipment in a cell, and "uplink" is used to indicate the transmission direction of the signal or data is a second direction transmitting from the user equipment in the cell to the station. For example, "downlink signal" is used to indicate that the transmission direction of the signal is a first direction. In addition, in embodiments of the disclosure, the term "and/or" is merely an association relationship that describes associated objects, indicating that there are three relationships. Specifically, A and/or B means that there are three situations: existence of A alone, existence of A and B simultaneously, and existence of B alone. In addition, the character "/" generally indicates that the related objects are a kind of "or" relationship herein.

The method embodiments of the disclosure have been described in detail above with reference to FIGS. 1 to 11, and device embodiments of the disclosure will be described in detail below with reference to FIGS. 14 to 19.

FIG. 14 is a schematic block diagram of a first device 400 provided in an embodiment of the disclosure.

As shown in FIG. 14, the first device 400 includes the following a first receiving unit 410 and a positioning unit 420.

The receiving unit 410 is configured to receive position information of a second device transmitted by the second device.

The positioning unit 420 is configured to locate position information of the first device based on the position information of the second device.

In some embodiments, the position information of the second device is carried in a backscattering signal.

In some embodiments, the position information of the second device is position information stored in the second device.

In some embodiments, the position information of the second device is predefined.

In some embodiments, the position information of the second device being predefined includes: the position information of the second device is position information of deployment of the second device.

In some embodiments, the position information of the second device is information acquired from the third device.

In some embodiments, the information acquired from the third device is information acquired from a fourth device, and the fourth device comprises at least one of:

a global positioning system (GPS) receiver, a mobile terminal, a network device, a wireless fidelity (WiFi) device or a Bluetooth device.

In some embodiments, the second device and the third device are connected in a wired or wireless manner.

In some embodiments, an interface for information exchange is provided between the second device and the third device.

In some embodiments, the third device is a network device.

In some embodiments, the third device is a device associated with the second device.

In some embodiments, the receiving unit 410 may further be configured to:
transmit at least one of an energy supply signal or a triggering signal to the second device.

In some embodiments, the receiving unit 410 may further be configured to:
transmit control information to the network device, and the control information is used to control the network device to transmit at least one of an energy supply signal or a triggering signal to the second device.

In some embodiments, the position information of the second device comprises at least one of: coordinate information, latitude and longitude information, or region position information.

In some embodiments, the positioning unit 420 is specifically configured to:
determine the position information of the first device based on the position information of the second device and at least one of the following information of a backscattering signal transmitted by the second device:
time of arrival (TOA), time difference of arrival (TDOA), angle of arrival (AOA) and received signal strength (RSS).

In some embodiments, the method is applicable to outdoor positioning scenes and/or indoor positioning scenes.

In some embodiments, the first device is a terminal device or a network device.

In some embodiments, the second device is a terminal device.

It should be understood that the device embodiments may correspond to the method embodiments and similar descriptions thereof may refer to the method embodiments. In particular, the first device 400 shown in FIG. 14 may correspond to a respective entity for performing the method 200 in the embodiments of the disclosure. The aforementioned and other operations and/or functions of the respective units in the first device 400 are intended to implement the corresponding processes in the method shown in FIG. 6, respectively, which will not be described here for the sake of simplicity.

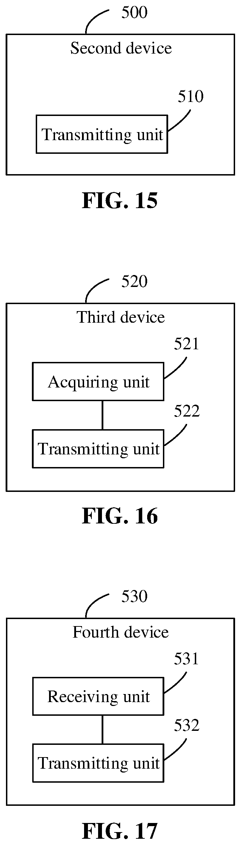

FIG. 15 is a schematic block diagram of a second device 500 provided in an embodiment of the disclosure.

As shown in FIG. 15, the second device 500 includes a transmitting unit 510.

The transmitting unit 510 is configured to transmit position information of the second device to a first device, and the position information of the second device is used to locate position information of the first device.

In some embodiments, the position information of the second device is carried in a backscattering signal.

In some embodiments, the position information of the second device is position information stored in the second device.

In some embodiments, the position information of the second device is predefined.

In some embodiments, the position information of the second device being predefined includes: the position information of the second device is position information of deployment of the second device.

In some embodiments, the position information of the second device is information acquired from the third device.

In some embodiments, the information acquired from the third device is information acquired from a fourth device, and the fourth device comprises at least one of:
a global positioning system (GPS) receiver, a mobile terminal, a network device, a wireless fidelity (WiFi) device or a Bluetooth device.

In some embodiments, the second device and the third device are connected in a wired or wireless manner.

In some embodiments, an interface for information exchange is provided between the second device and the third device.

In some embodiments, the third device is a network device.

In some embodiments, the third device is a device associated with the second device.

In some embodiments, the transmit unit 510 may be further configured to:
receive at least one of an energy supply signal or a triggering signal transmitted by the first device.

In some embodiments, the transmit unit 510 may be further configured to:
receive at least one of an energy supply signal or a triggering signal transmitted by the network device.

In some embodiments, the position information of the second device comprises at least one of: coordinate information, latitude and longitude information, or region position information.

In some embodiments, the position information of the second device is used to determine the position information of the first device with at least one of the following information:
time of arrival (TOA), time difference of arrival (TDOA), angle of arrival (AOA) or received signal strength (RSS).

In some embodiments, the method is applicable to outdoor positioning scenes and/or indoor positioning scenes.

In some embodiments, the first device is a terminal device or a network device.

In some embodiments, the second device is a terminal device.

It should be understood that the device embodiments may correspond to the method embodiments and similar descriptions thereof may refer to the method embodiments. In particular, the second device 500 shown in FIG. 15 may correspond to a respective entity for performing the method 200 in the embodiments of the disclosure. The aforementioned and other operations and/or functions of the respective units in the second device 500 are intended to implement the corresponding processes in the method shown in FIG. 6, respectively, which will not be described here for the sake of simplicity.

FIG. 16 is a schematic block diagram of a third device 520 provided in an embodiment of the disclosure.

As shown in FIG. 16, the third device 520 includes an acquiring unit 521 and a transmitting unit 522.

The acquiring unit 521 is configured to acquire position information of a second device.

The transmitting unit 522 is configured to transmit the position information of the second device to the second device.

In some embodiments, the fourth device includes at least one of:
a global positioning system (GPS) receiver, a mobile terminal, a network device, a wireless fidelity (WiFi) device or a Bluetooth device.

In some embodiments, the third device and the second device are connected in a wired or wireless manner.

In some embodiments, an interface for information exchange is provided between the third device and the second device.

In some embodiments, the third device is a network device.

In some embodiments, the third device is a device associated with the second device.

In some embodiments, the position information of the second device is carried in at least one of an energy supply signal or a triggering signal transmitted by the third device to the second device.

In some embodiments, the position information of the second device is used to locate the position information of the first device.

In some embodiments, the position information of the second device comprises at least one of: coordinate information, latitude and longitude information, or region position information.

In some embodiments, the method is applicable to outdoor positioning scenes and/or indoor positioning scenes.

It should be understood that the device embodiments may correspond to the method embodiments and similar descriptions thereof may refer to the method embodiments. In particular, the third device 520 shown in FIG. 16 may correspond to a respective entity for performing the method 230 in the embodiments of the disclosure. The aforementioned and other operations and/or functions of the respective units in the third device 520 are intended to implement the corresponding processes in the method shown in FIG. 12, respectively, which will not be described here for the sake of simplicity.

FIG. 17 is a schematic block diagram of a fourth device 530 provided in an embodiment of the disclosure.

As shown in FIG. 17, the fourth device 530 includes an acquiring unit 531 and a transmitting unit 532.

The acquiring unit 531 is configured to acquire position information of a second device.

The transmitting unit 532 is configured to transmit the position information of the second device to the second device through a third device.

In some embodiments, the fourth device includes at least one of:
a global positioning system (GPS) receiver, a mobile terminal, a network device, a wireless fidelity (WiFi) device or a Bluetooth device.

In some embodiments, the third device and the second device are connected in a wired or wireless manner.

In some embodiments, an interface for information exchange is provided between the third device and the second device.

In some embodiments, the third device is a network device.

In some embodiments, the third device is a device associated with the second device.

In some embodiments, the position information of the second device is carried in at least one of an energy supply signal or a triggering signal transmitted by the third device to the second device.

In some embodiments, the position information of the second device is used to locate the position information of the first device.

In some embodiments, the position information of the second device comprises at least one of: coordinate information, latitude and longitude information, or region position information.

In some embodiments, the method is applicable to outdoor positioning scenes and/or indoor positioning scenes.

It should be understood that the device embodiments may correspond to method embodiments and similar descriptions thereof may refer to method embodiments. In particular, the fourth device 530 shown in FIG. 17 may correspond to a respective entity for performing the method 230 fin the embodiments of the disclosure. The aforementioned and other operations and/or functions of the respective units in the fourth device 530 are intended to implement the corresponding processes in the method shown in FIG. 12, respectively, which will not be described here for the sake of simplicity.

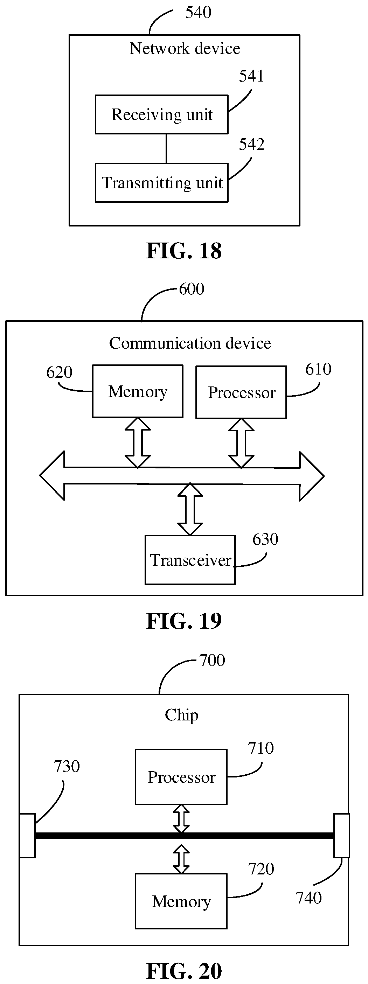

FIG. 18 is a schematic block diagram of a network device 540 provided in an embodiment of the disclosure.

As shown in FIG. 18, the network device 540 includes a receiving unit 541 and a transmitting unit 542.

The receiving unit 541 is configured to receive control information transmitted by a first device, and the control information is used to control the network device to transmit at least one of an energy supply signal or a triggering signal to a second device.

The transmitting unit 542 is configured to transmit at least one of an energy supply signal or a triggering signal to the second device in response to the control information.

In some embodiments, the receiving unit 541 is further configured to:
acquire the position information of the second device from the fourth device. Herein, the transmitting unit 542 is further configured to:
transmit the position information of the second device to the second device.

In some embodiments, the fourth device includes at least one of:
a global positioning system (GPS) receiver, a mobile terminal, a network device, a wireless fidelity (WiFi) device or a Bluetooth device.

In some embodiments, the network device and the second device are connected in a wired or wireless manner.

In some embodiments, an interface for information exchange is provided between the network device and the second device.

In some embodiments, the network device is a device associated with the second device.

In some embodiments, the position information of the second device is carried in at least one of an energy supply signal or a triggering signal transmitted from the network device to the second device.

In some embodiments, the position information of the second device is used to locate the position information of the first device.

In some embodiments, the position information of the second device comprises at least one of: coordinate information, latitude and longitude information, or region position information.

In some embodiments, the method is applicable to outdoor positioning scenes and/or indoor positioning scenes.

It should be understood that the device embodiments may correspond to the method embodiments and similar descriptions thereof may refer to the method embodiments. In particular, the network device 540 shown in FIG. 18 may correspond to a respective entity for performing the method 250 in the embodiments of the disclosure. The aforementioned and other operations and/or functions of the respective units in the network device 540 are intended to implement the corresponding processes in the method shown in FIG. 13, respectively, which will not be described here for the sake of simplicity.

The communication devices of the embodiments of the disclosure have been described above from the perspective of functional modules with reference to the accompanying drawings. It should be understood that the functional modules may be implemented in hardware form, or by instructions in software form, or by a combination of hardware and software modules. In particular, the respective operations of the method embodiments in the embodiments of the disclosure may be implemented by integrated logic circuits of the hardware in the processor and/or instructions in the form of software. The operations of the methods disclosed combined with the embodiments of the disclosure may be directly embodied as the execution of the hardware in a decoding processor or the execution of a combination of the hardware and software modules in the decoding processor. Optionally, the software modules may be located in a mature storage medium in the art, such as a RAM, a flash memory, a read-only memory, a programmable read-only memory, an electrically erasable programmable memory, a register, etc. The storage medium is located in a memory, and the processor reads information in the memory and completes the operations in the method embodiments in combination with its hardware.

For example, the above-mentioned receiving unit 410, transmitting unit 510, acquiring unit 521, transmitting unit 522, receiving unit 531, transmitting unit 532, receiving unit 541 and transmitting unit 542 may be realized by a transceiver, and the above-mentioned positioning unit 420 may be realized by a processor.

FIG. 19 is a schematic structural diagram of a communication device 600 provided in an embodiment of the disclosure.

As shown in FIG. 19, the communication device 600 includes a processor 610.

Herein, the processor 610 may be configured to invoke and run a computer program from a memory to implement the methods in the embodiments of the disclosure.

As shown in FIG. 19, the communication device 600 further includes a memory 620.

Herein, the memory 620 may be configured to store indication information and to store codes, instructions and the like executed by the processor 610. Herein, the processor 610 may invoke and run a computer program from the memory 620 to implement the methods in the embodiments of the disclosure. The memory 620 may be a separate device independent of the processor 610 or integrated within the processor 610.

As shown in FIG. 19, the communication device 600 further includes a transceiver 630.

Herein, the processor 610 may control the transceiver 630 to communicate with other devices, and specifically, the transceiver 630 may transmit information or data to other devices or receive information or data transmitted from other devices. The transceiver 630 may include a transmitter and a receiver. The transceiver 630 may further include antennas, the number of which may be one or multiple.

It should be understood that the various components in the communication device 600 are connected by a bus system, and the bus system includes a power bus, a control bus, and a status signal bus in addition to a data bus.

It should also be understood that the communication device 600 may be the first device in the embodiments of the disclosure, and the communication device 600 may implement the corresponding processes implemented by the first device in the respective methods in the embodiments of the disclosure. That is to say, the communication device 600 in the embodiments of the disclosure may correspond to the first device 400 in embodiments of the disclosure, and may correspond to a respective entity for performing the method 200 in the embodiments of the disclosure, which will not be described here for the sake of simplicity. Similarly, the communication device 600 may be the second device in the embodiments of the disclosure, and the communication device 600 may implement the corresponding processes implemented by the second device in the respective methods in the embodiments of the disclosure. That is to say, the communication device 600 in the embodiments of the disclosure may correspond to the second device 500 in the embodiments of the disclosure, and may correspond to a respective entity for performing the method 200 in the embodiments of the disclosure, which will not be described here for the sake of simplicity. Of course, the communication device 600 may also be the third device, the fourth device or the network device in the embodiments of the disclosure, and the communication device 600 may implement the corresponding processes implemented by the third device, the fourth device or the network device in the respective methods in the embodiments of the disclosure. That is to say, the communication device 600 in the embodiments of the disclosure may correspond to the third device 520, the fourth device 530 or the network device 540 in the embodiments of the disclosure, and corresponds to a respective entity for performing the method 230 or 250 in the embodiments of the disclosure, which will not be described here for the sake of simplicity.

In addition, a chip is also provided in an embodiment of the disclosure.

For example, the chip may be an integrated circuit chip with signal processing capabilities, which is able to implement or perform the methods, the operations, and the logic block diagrams disclosed in the embodiments of the disclosure. The chip may also be referred to as a system-level chip, a system chip, a chip system or a system-on-chip, etc. Optionally, the chip may be applied to various communication devices, so that a communication device(s) mounted with the chip performs the methods, the operations, and the logic block diagrams disclosed in the embodiments of the disclosure.

FIG. 20 is a schematic structural diagram of a chip 700 provided in an embodiment of the disclosure.

As shown in FIG. 20, the chip 700 includes a processor 710.

Herein, the processor 710 may invoke and run a computer program from a memory to implement the methods in the embodiments of the disclosure.

As shown in FIG. 20, the chip 700 may further include a memory 720.

Herein, the processor 710 may invoke and run a computer program from the memory 720 to implement the methods in the embodiments of the disclosure. The memory 720 is configured to store indication information and to store codes, instructions and the like executed by the processor 710. The memory 720 may be a separate device independent of the processor 710 or integrated within the processor 710.

As shown in FIG. 20, the chip 700 may further include an input interface 730.

Herein, the processor 710 may control the input interface 730 to communicate with other devices or chips, and specifically, the processor 710 may acquire information or data transmitted from other devices or chips.

As shown in FIG. 20, the chip 700 may further include an output interface 740.

Herein, the processor 710 may control the output interface 740 to communicate with other devices or chips, and specifically, the processor 710 may output information or data to other devices or chips.

It should be understood that the chip 700 may be applied to the first device, the second device, the third device, the fourth device or the network device in the embodiments of the disclosure. In other words, the chip 700 may implement the corresponding processes implemented by the first device, the second device, the third device, the fourth device or the network device in the respective methods in the embodiments of the disclosure, which will not be described here for the sake of simplicity.

It should also be understood that the various components in the chip 700 are connected by a bus system, and the bus system includes a power bus, a control bus, and a status signal bus in addition to a data bus.

The processor mentioned above may include, but is not limited to:
a general purpose processor, a digital signal processor (DSP), an application specific integrated circuit (ASIC), a field programmable gate array (FPGA) or other programmable logic device, a discrete gate or a transistor logic device, a discrete hardware component and so on.

The processor may be configured to implement or perform the methods, the operations, and the logic block diagrams disclosed in the embodiments of the disclosure. The operations combined with the methods disclosed in the embodiments of the disclosure may be directly embodied as the execution of the hardware in a decoding processor or the execution of a combination of the hardware and software modules in the decoding processor. The software modules may be located in a mature storage medium in the art, such as a RAM, a flash memory, a read-only memory, a programmable read-only memory, an electrically erasable programmable memory, a register, etc. The storage medium is located in the memory, and the processor reads the information in the memory and completes the operations in the above methods in combination with its hardware.

The memory mentioned above may include, but is not limited to:
a volatile memory and/or a nonvolatile memory. Herein, the nonvolatile memory may be a read-only memory (ROM), a programmable ROM (PROM), an erasable PROM (EPROM), an electrically erasable EPROM (EEPROM), or a flash memory. The volatile memory may be a random access memory (RAM) which serves as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM), and a direct rambus RAM (DR RAM).

It should be noted that the memory described herein is intended to include these and any other suitable types of memory.

A computer-readable storage medium for storing computer programs is also provided in an embodiment of the disclosure. The computer-readable storage medium stores one or more programs including instructions that, when executed by a portable electronic device including multiple applications, enable the portable electronic device to execute the methods for wireless communication provided in the disclosure.

Optionally, the computer-readable storage medium may be applied to the first device, the second device, the third device, the fourth device or the network device in the embodiments of the disclosure. The computer program causes a computer to execute the corresponding processes implemented by the first device, the second device, the third device, the fourth device or the network device in the respective methods in the embodiments of the disclosure, which will not be described here for the sake of simplicity.

A computer program product including a computer program is also provided in an embodiment of the disclosure. When executed by a computer, the computer program causes the computer to execute the methods for wireless communication provided in the disclosure.

Optionally, the computer program product may be applied to the first device, the second device, the third device, the fourth device or the network device in the embodiments of the disclosure. The computer program causes a computer to execute the corresponding processes implemented by the first device, the second device, the third device, the fourth device or the network device in the respective methods in the embodiments of the disclosure, which will not be described here for the sake of simplicity.

A computer program is also provided in an embodiment of the disclosure. When executed by a computer, the computer program causes the computer to execute a method for wireless communication provided in the disclosure.

Optionally, the computer program may be applied to the first device, the second device, the third device, the fourth device or the network device in the embodiments of the disclosure. When executed by a computer, the computer program causes the computer to execute the corresponding processes implemented by the first device, the second device, the third device, the fourth device or the network device in the respective methods in the embodiments of the disclosure, which will not be described here for the sake of simplicity.

A communication system is also provided in an embodiment of the disclosure. The communication system may include the first device, the second device, the third device, the fourth device or the network device mentioned above, which will not be described here for the sake of simplicity. It should be noted that the term "system" herein may also be referred to as "network management architecture" or "network system".

It should also be understood that the terms used in the embodiments of the disclosure and the accompanying claims are only for the purpose of describing specific embodiments and not intended to limit the embodiments of the disclosure. For example, the singular forms "alan", "said", "above mentioned" and "the" used in the embodiments of the disclosure and the accompanying claims are also intended to include the plural forms, unless the context clearly indicates otherwise.

Those skilled in the art will appreciate that the units and algorithm operations in various examples described in connection with the embodiments disclosed herein may be implemented in electronic hardware or a combination of computer software and electronic hardware. Whether these functions are performed in hardware or software depends on the specific applications and design constraints of the technical solutions. Professionals may implement the described functionality by using different methods for each specific application, and such implementation, however, should not be considered beyond the scope of the embodiments of the disclosure. When implemented in the form of a software functional unit and sold or used as a stand-alone product, these functions may be stored in a computer-readable storage medium. Based on this understanding, the technical solutions of the embodiments of the disclosure essentially or part of that contributes to related art or part of the technical solutions may be embodied in the form of a software product. The software product is stored in a storage medium and includes several instructions, which cause a computer device (which may be a personal computer, a server, or a network device, etc.) to perform all or part of operations of the methods described by the embodiments of the disclosure. The aforementioned storage media include various media capable of storing program codes, such as U disk, mobile hard disk, read only memory, random access memory, magnetic disk or optical disk.

Those skilled in the art will also appreciate that, the specific operating processes of the systems, the devices, and the units described above may refer to the corresponding processes in the foregoing method embodiments and will not be described here for the sake of convenience and simplicity. In several embodiments provided in the disclosure, it should be understood that the disclosed systems, devices and methods may be implemented in other ways. For example, the partition of units or modules or components in the device embodiments described above is only a logical functional partition, which may be actually implemented in another partition way. For example, multiple units or modules or components may be combined or integrated into another system, or some units or modules or components may be ignored or not executed. For another example, the units/modules/components described above as separation/display components may or may not be physically separated, i.e. they may be located in one place, or be distributed over multiple network units. All or part of the units/modules/components may be selected according to the actual needs to achieve the purpose of the embodiments of the disclosure. Finally, it should be noted that the coupling or direct coupling or communication connection shown or discussed above may be indirect coupling or communication connection through some interfaces, devices or units, and may be in electrical, mechanical or other forms.

The above is only the specific implementation mode of the disclosure and not intended to limit the scope of protection of the disclosure. Any variations or replacements apparent to those skilled in the art within the technical scope disclosed by the disclosure shall fall within the scope of protection of the disclosure. Therefore, the scope of protection of the disclosure shall be defined by the appended claims.

## Claims

1. A method for wireless communication, applied to a first device, the method comprising:
receiving position information of a second device transmitted by the second device; and
locating position information of the first device based on the position information of the second device.

2. The method of claim 1, wherein the position information of the second device is carried in a backscattering signal.

3. The method of claim 1 or 2, wherein the position information of the second device is position information stored in the second device.

4. The method of any one of claims 1 to 3, wherein the position information of the second device is predefined.

5. The method of claim 4, wherein the position information of the second device being predefined comprises that: the position information of the second device is position information of deployment of the second device.

6. The method of any one of claims 1 to 5, wherein the position information of the second device is information acquired from a third device.

7. The method of claim 6, wherein the information acquired from the third device is information acquired from a fourth device, and the fourth device comprises at least one of:
a global positioning system (GPS) receiver, a mobile terminal, a network device, a wireless fidelity (WiFi) device, or a Bluetooth device.

8. The method of claim 6 or 7, wherein the second device and the third device are connected in a wired or wireless manner.

9. The method of any one of claims 6 to 8, wherein an interface for information exchange is provided between the second device and the third device.

10. The method of any one of claims 6 to 9, wherein the third device is a network device.

11. The method of any one of claims 6 to 10, wherein the third device is a device associated with the second device.

12. The method of any one of claims 1 to 11, wherein the method further comprises:
transmitting to the second device at least one of an energy supply signal or a triggering signal.

13. The method of any one of claims 1 to 12, wherein the method further comprises:
transmitting control information to the network device, wherein the control information is used to control the network device to transmit at least one of an energy supply signal or a triggering signal to the second device.

14. The method of any one of claims 1 to 13, wherein the position information of the second device comprises at least one of: coordinate information, latitude and longitude information, or region position information.

15. The method of any one of claims 1 to 14, wherein locating the position information of the first device based on the position information of the second device comprises:
determining the position information of the first device based on the position information of the second device and at least one of the following information of a backscattering signal transmitted by the second device:
time of arrival (TOA), time difference of arrival (TDOA), angle of arrival (AOA) or received signal strength (RSS).

16. The method of any one of claims 1 to 15, wherein the method is applicable for outdoor positioning scenes and/or indoor positioning scenes.

17. The method of any one of claims 1 to 16, wherein the first device is a terminal device or a network device.

18. The method of any one of claims 1 to 17, wherein the second device is a terminal device.

19. A method for wireless communication, applied to a second device, the method comprising:
transmitting position information of the second device to a first device, wherein the position information of the second device is used to locate position information of the first device.

20. The method of claim 19, wherein the position information of the second device is carried in a backscattering signal.

21. The method of claim 19 or 20, wherein the position information of the second device is position information stored in the second device.

22. The method of any one of claims 19 to 21, wherein the position information of the second device is predefined.

23. The method of claim 22, wherein the position information of the second device being predefined comprises that: the position information of the second device is position information of deployment of the second device.

24. The method of any one of claims 19 to 23, wherein the position information of the second device is information acquired from a third device.

25. The method of claim 24, wherein the information acquired from the third device is information acquired from a fourth device, and the fourth device comprises at least one of:
a global positioning system (GPS) receiver, a mobile terminal, a network device, a wireless fidelity (WiFi) device, or a Bluetooth device.

26. The method of claim 24 or 25, wherein the second device and the third device are connected in a wired or wireless manner.

27. The method of any one of claims 24 to 26, wherein an interface for information exchange is provided between the second device and the third device.

28. The method of any one of claims 24 to 27, wherein the third device is a network device.

29. The method of any one of claims 24 to 28, wherein the third device is a device associated with the second device.

30. The method of any one of claims 19 to 29, wherein the method further comprises:
receiving at least one of an energy supply signal or a triggering signal transmitted by the first device.

31. The method of any one of claims 19 to 30, wherein the method further comprises:
receiving at least one of an energy supply signal or a triggering signal transmitted by a network device.

32. The method of any one of claims 19 to 31, wherein the position information of the second device comprises at least one of: coordinate information, latitude and longitude information, or region position information.

33. The method of any one of claims 19 to 32, wherein the position information of the second device is used to determine the position information of the first device together with at least one of the following information:
time of arrival (TOA), time difference of arrival (TDOA), angle of arrival (AOA) or received signal strength (RSS).

34. The method of any one of claims 19 to 33, wherein the method is applicable for outdoor positioning scenes and/or indoor positioning scenes.

35. The method of any one of claims 19 to 34, wherein the first device is a terminal device or a network device.

36. The method of any one of claims 19 to 35, wherein the second device is a terminal device.

37. A method for wireless communication, applied to a third device, the method comprising:
acquiring position information of a second device from a fourth device; and
transmitting the position information of the second device to the second device.

38. The method of claim 37, wherein the fourth device comprises at least one of:
a global positioning system (GPS) receiver, a mobile terminal, a network device, a wireless fidelity (WiFi) device, or a Bluetooth device.

39. The method of claim 37 or 38, wherein the third device and the second device are connected in a wired or wireless manner.

40. The method of any one of claims 37 to 39, wherein an interface for information exchange is provided between the third device and the second device.

41. The method of any one of claims 37 to 40, wherein the third device is a network device.

42. The method of any one of claims 37 to 41, wherein the third device is a device associated with the second device.

43. The method of any one of claims 37 to 42, wherein the position information of the second device is carried in at least one of an energy supply signal or a triggering signal transmitted by the third device to the second device.

44. The method of any one of claims 37 to 43, wherein the position information of the second device is used to locate position information of a first device.

45. The method of any one of claims 37 to 44, wherein the position information of the second device comprises at least one of: coordinate information, latitude and longitude information, or region position information.

46. The method of any one of claims 37 to 45, wherein the method is applicable for outdoor positioning scenes and/or indoor positioning scenes.

47. A method for wireless communication, applied to a fourth device, the method comprising:
acquiring position information of a second device; and
transmitting the position information of the second device to the second device through a third device.

48. The method of claim 47, wherein the fourth device comprises at least one of:
a global positioning system (GPS) receiver, a mobile terminal, a network device, a wireless fidelity (WiFi) device, or a Bluetooth device.

49. The method of claim 47 or 48, wherein the third device and the second device are connected in a wired or wireless manner.

50. The method of any one of claims 47 to 49, wherein an interface for information exchange is provided between the third device and the second device.

51. The method of any one of claims 47 to 50, wherein the third device is a network device.

52. The method of any one of claims 47 to 51, wherein the third device is a device associated with the second device.

53. The method of any one of claims 47 to 52, wherein the position information of the second device is carried in at least one of an energy supply signal or a triggering signal transmitted by the third device to the second device.

54. The method of any one of claims 47 to 53, wherein the position information of the second device is used to locate position information of a first device.

55. The method of any one of claims 47 to 54, wherein the position information of the second device comprises at least one of: coordinate information, latitude and longitude information, or region position information.

56. The method of any one of claims 47 to 55, wherein the method is applicable for outdoor positioning scenes and/or indoor positioning scenes.

57. A method for wireless communication, applied to a network device, the method comprising:
receiving control information transmitted by a first device, wherein the control information is used to control the network device to transmit at least one of an energy supply signal or a triggering signal to a second device; and
transmitting at least one of an energy supply signal or a triggering signal to the second device in response to the control information.

58. The method of claim 57, wherein the method further comprises:
acquiring position information of the second device from a fourth device; and
transmitting the position information of the second device to the second device.

59. The method of claim 58, wherein the fourth device comprises at least one of:
a global positioning system (GPS) receiver, a mobile terminal, a network device, a wireless fidelity (WiFi) device, or a Bluetooth device.

60. The method of claim 58 or 59, wherein the network device and the second device are connected in a wired or wireless manner.

61. The method of any one of claims 58 to 60, wherein an interface for information exchange is provided between the network device and the second device.

62. The method of any one of claims 58 to 61, wherein the network device is a device associated with the second device.

63. The method of any one of claims 58 to 62, wherein the position information of the second device is carried in at least one of an energy supply signal or a triggering signal transmitted by the network device to the second device.

64. The method of any one of claims 58 to 63, wherein the position information of the second device is used to locate position information of a first device.

65. The method of any one of claims 58 to 64, wherein the position information of the second device comprises at least one of: coordinate information, latitude and longitude information, or region position information.

66. The method of any one of claims 58 to 65, wherein the method is applicable for outdoor positioning scenes and/or indoor positioning scenes.

67. A first device, comprising:
a receiving unit, configured to receive position information of a second device transmitted by the second device; and
a positioning unit, configured to locate position information of the first device based on the position information of the second device.

68. A second device, comprising:
a transmitting unit, configured to transmit position information of the second device to a first device, wherein the position information of the second device is used to locate position information of the first device.

69. A third device, comprising:
an acquiring unit, configured to acquire position information of a second device; and
a transmitting unit, configured to transmit the position information of the second device to the second device.

70. A fourth device, comprising:
an acquiring unit, configured to acquire position information of a second device; and
a transmitting unit, configured to transmit the position information of the second device to the second device through a third device.

71. A network device, comprising:
a receiving unit, configured to receive control information transmitted by a first device, wherein the control information is used to control the network device to transmit at least one of an energy supply signal or a triggering signal to a second device; and
a transmitting unit, configured to transmit at least one of an energy supply signal or a triggering signal to the second device in response to the control information.

72. A first device, comprising:
a processor and a memory for storing a computer program, wherein the processor is configured to call and run the computer program stored in the memory to perform the method of any one of claims 1 to 18.

73. A second device, comprising:
a processor and a memory for storing a computer program, wherein the processor is configured to call and run the computer program stored in the memory to perform the method of any one of claims 19 to 36.

74. A third device, comprising:
a processor and a memory for storing a computer program, wherein the processor is configured to call and run the computer program stored in the memory to perform the method of any one of claims 37 to 46.

75. A fourth device, comprising:
a processor and a memory for storing a computer program, wherein the processor is configured to call and run the computer program stored in the memory to perform the method of any one of claims 47 to 56.

76. A network device, comprising:
a processor and a memory for storing a computer program, wherein the processor is configured to call and run the computer program stored in the memory to perform the method of any one of claims 57 to 66.

77. A chip, comprising:
a processor, configured to call and run a computer program from a memory so that a device on which the chip is mounted to perform the method of any one of claims 1 to 18, the method of any one of claims 19 to 36, the method of any one of claims 37 to 46, the method of any one of claims 47 to 56 or the method of any one of claims 57 to 66.

78. A computer-readable storage medium, having stored thereon a computer program, wherein the computer program causes the computer to perform the method of any one of claims 1 to 18, the method of any one of claims 19 to 36, the method of any one of claims 37 to 46, the method of any one of claims 47 to 56 or the method of any one of claims 57 to 66.

79. A computer program product, comprising computer program instructions, wherein the computer program instructions cause the computer to perform the method of any one of claims 1 to 18, the method of any one of claims 19 to 36, the method of any one of claims 37 to 46, the method of any one of claims 47 to 56 or the method of any one of claims 57 to 66.

80. A computer program, which causes a computer to perform the method of any one of claims 1 to 18, the method of any one of claims 19 to 36, the method of any one of claims 37 to 46, the method of any one of claims 47 to 56 or the method of any one of claims 57 to 66.
